# EUROPEAN PATENT APPLICATION

(11) **EP 1 336 672 A1**
(43) Date of publication of application: **20.08.2003**
(21) Application number: 02075624.3
(22) Date of filing: 15.02.2002
(51) Int. Cl.: D01F 1/10, D01F 6/04, C08K 7/06

(54) **Method of producing high strength elongated products containing carbon nanotubes**

(71) Applicant: DSM N.V., 6411 TE Heerlen (NL)
(72) Inventor: Marissen, Roelof, 6121 HS Born (NL); van Es, Martin Antonius, 6443 ED Brunssum (NL)
(74) Representative: Mooij, Johannes Jacobus

(57) **Abstract**

The present invention relates to a method of producing a high strength and high modulus elongated product comprising the steps of (a) making a composition comprising a semi-crystalline polymer and carbon nanotubes, (b) extruding said composition into an elongated product, and (c) stretching the product below the melting point of the polymer, wherein (a) the composition is obtained by mixing (a1) a colloidal dispersion of nanotubes and optionally other components in a solvent 1 and (a2) a solution of the polymer in a solvent 2, solvents 1 and 2 being miscible; (b) extruding is performed from the mixture obtained in (a); and (c) a stretch ratio of at least 5 is applied below the melting point of the polymer. The advantages of the invention include production of products with higher tensile properties, especially strength, with lower concentration of nanotubes than with a known method.

The invention also concerns a high strength elongated product containing nanotubes obtainable by the method according to the invention, especially a polyolefin fibre containing nanotubes having a tensile strength of higher than 3.0 GPa. The invention also relates to a process for making composite articles wherein high strength elongated products, preferably fibres, according to the invention are used.

## Description

The invention relates to a method of producing an elongated product comprising the steps of (a) making a composition comprising a semi-crystalline polymer and carbon nanotubes, (b) extruding said composition into an elongated product, and (c) stretching the product below the melting point of the polymer. The invention further relates to a high strength elongated product containing carbon nanotubes obtainable by the method according to the invention, especially a polyolefin fibre containing carbon nanotubes having a tensile strength of higher than 3.0 GPa. The invention also concerns a process for making composite articles wherein high strength elongated products, preferably fibres, according to the invention are used.

Such a method is known from WO 0069958 A1. In this patent application a method is described wherein in step (a) carbon nanotubes are introduced into a semi-crystalline polymer, i.c. isotactic polypropylene (iPP), via melt compounding, which composition is then melt extruded in step (b) into fibres, and in step (c) stretched in the solid state so as to orient the carbon nanotubes. It is reported that iPP fibres can be made with a tensile strength of up to about 2.3 GPa and a tensile modulus (at 1% strain) of up to about 21 GPa. The maximum solid-state stretch ratio that could be applied is indicated to be 6.3.

Within the context of this application an elongated product is understood to be any elongated product having a dimension in at least one direction that is much larger than in at least one of the other directions. Examples of such elongated products include fibres or filaments, tapes, ribbons, films, and sheets.

Carbon nanotubes, hereinafter also referred to as nanotubes, are carbon-based molecules having a structure related to the structure of so-called Buckminsterfullerene (C₆₀) and other fullerenes. Nanotubes have a cylindrical structure and may grow into nearly endless tubes of from 50 nm up to 10 mm in length. The nanotube diameter may be from about 0.5 -100 nm. Based on theoretical considerations, it is suggested that a material based on oriented nanotubes could have a strength of about 100 GPa and a stiffness of about 1000 GPa. Nanotubes would also be an ideal reinforcing fibre for polymer composites; because they have a very high aspect ratio (length-to-diameter ratio), but are still short enough to show enough flowability when incorporated into a polymer matrix. Nanotubes can have only a single-wall structure (single-wall nanotubes, abbreviated as SWNT), or a multi-wall structure (MWNT), resembling concentric cylinders of several layers. Nanotubes show a strong tendency to form aggregates of up to 1000 nanotubes, roughly parallel arranged in a two-dimensional lattice. Such aggregates, also referred to as ropes can agglomerate to form a powder or a sheet material. Nanotubes are generally difficult to disperse in organic solvents, because of strong particle interaction in aggregates. Preparation of nanotubes, especially SWNT, and their properties and potential applications have been subject of numerous publications, see for example WO 9709272 A1 and WO 9839250 A1.

A disadvantage of the method as described in WO 0069958 A1 is that the tensile properties of the iPP/nanotubes fibre that is obtained are still not at the level desired for the most demanding applications.

The object of the present invention is to provide a method for producing an elongated product comprising a semi-crystalline polymer and carbon nanotubes, which product shows tensile strength significantly higher than can be obtained by the known method.

This object is achieved according to the invention with a method comprising said steps (a)-(c) wherein in
(a) the composition is obtained by mixing
   (a1) a colloidal dispersion of nanotubes and optionally other components in a solvent 1 and
   (a2) a solution of the polymer in a solvent 2,
   wherein solvents 1 and 2 are miscible;
(b) extruding is performed from the mixture obtained in (a); and
(c) a stretch ratio of at least 5 is applied below the melting point of the polymer.

A further advantage of the method according to the invention is that a lower concentration of the expensive nanotubes material can be used to obtain a certain increase in properties. On the other hand, the method allows a higher amount of nanotubes to be dispersed into a polymer matrix and to contribute to strength increase, than would be possible via conventional melt mixing.

From EP 0055001 A1 it is known that a polyethylene fibre containing filler particles can be made via a solution spinning process, but this publication does not disclose or suggest to use nanotubes, nor the specific method of the present invention. In addition, the tensile strength reported therein does not exceed a level of 2.0 GPa.

The semi-crystalline polymer that can be used in the method according to the invention may be selected from a broad range of polymers. Semicrystalline is herein understood to mean that the polymer molecules show local ordening, affecting the reological and/or mechanical properties of the polymer, and which ordening is disrupted upon heating at a certain temperature; i.e. the melting temperature (Tₘ). Preferably a polymer is used that shows significant molecular orientation upon stretching or elongating a composition or solution comprising said polymer. Suitable polymers include polyamides, polyesters, polyketones, polyoxazoles, polyimidazoles, polyvinyls, and polyolefines. Since solution spinning of a polymer is generally more expensive than melt spinning in view of the large amounts of solvents that need to be used and recovered, the method according to the invention preferably uses a semi-crystalline polymer that can not be processed via melt spinning, because of too high a melting point or too high viscosity, or a polymer that can be better oriented and elongated during solution spinning, resulting in higher strength. Examples of such polymers include aromatic polyamides, like poly(para-phenylene terephthalamide); polybenzoxazoles or polybenzothiazoles, like poly(p-phenylene-2,6-benzobisoxazole); polyvinyls, like polyvinylalcohol, polyacrylonitril, or copolymers thereof; aliphatic polyketones; and polyolefines, preferably of high molar mass, like polypropylenes and polyethylenes. Solution spinning is also preferred for making fibres from precursor polymers that react during spinning, like poly(2,6-diimidazo[4,5-b4',5'-e]pyridinylene-1,4(2,5-dihydroxy)phenylene).

In general, a process for extruding an elongated product from a polymer solution, also called a solution spinning process, can comprise one or more of the following steps: making of a polymer solution; spinning of the solution into a elongated product; stretching of the product in its fluid state (also called solution stretching); solidifying the product by cooling in air or by quenching in a non-solvent; stretching of the solvent-containing solidified product below the melting point (Tₘ) of the polymer (also called gel stretching); at least partially removing the solvent; stretching the resulting solid product, optionally at higher temperature but still below Tₘ (solid state stretching); and removing residual solvent/non-solvent. Solution spinning of an aromatic polyamide is described in e.g. EP 0939148 A1, of a polybenzoxazole in e.g. EP 0775222 A1. A process for solution or gel spinning of UH-PE fibres is described in more detail in WO 0173172 A1. Depending on the specific polymer and solvent, above indicated steps may also take place more or less simultaneously.

In case of polymers with a highly rigid molecular chain structure, polymer solutions thereof may show lyotropic or (semi) liquid crystalline behaviour, such as for poly(p-phenylene terephthalamide). Substantial molecular orientation is than generally already achieved during spinning and solution stretching.

Preferably, the method according to the invention uses polyvinyls, like polyvinylalcohol, polyacrylonitril, or copolymers thereof; aliphatic polyketones, like an alternating copolymer of ethylene and carbon monoxide; and polyolefines, preferably of high molar mass, as the polymer. Even more preferred are high molar mass polyolefines, like polypropylene and polyethylene and their copolymers, because very strong fibres can be obtained via solution spinning. Most preferably, a high molar mass polyethylene, like an ultra-high molar mass polyethylene (UH-PE) is used. Such polyethylenes have molar masses above about 500,000 g/mol, more preferably above about 1,000,000 g/mol (mass or weight averaged molar mass, M_{w}). The polyethylene may contain minor amounts of one or more other alpha-olefins as a comonomer, such as propylene, butylenes, pentene, hexane, 4-methylpentene, octene, and the like. Preferably, the polyethylene is substantially linear, which is understood to mean that the polyethylene contains less than 1 side chain or branch per 100 carbon atoms, preferably less than 1 per 500, and more preferably less than 1 per 1000. Whereas such high molar mass polymers may be too viscous in the melt to allow a melt extruding or spinning process, with a solution spinning process, also referred to as gel spinning process, elongated products like polyethylene fibres of high strength and modulus can be produced. Stretching the product below Tₘ during solution, gel and/or solid-state stretching is results in a marked increase in tensile properties.

Within the context of the present application a colloidal dispersion of nanotubes is understood to be a dispersion of nanotubes in a suitable solvent, wherein the nanotubes are dispersed at least as a mixture of individual nanotubes and aggregates of average particle size smaller than 250 nm, preferably smaller than 200 nm, more preferably smaller than 150 nm, even more preferably smaller than 100 nm, still more preferably smaller than 50 nm, and most preferably smaller than 25 nm. With average particle size is meant the average apparent diameter as observed with microscopy, preferably with an electron microscopic technique like TEM, of the cross-section of aggregated nanotubes particles. In order to improve dispersability, the nanotubes preferably have an average length of the tube that is smaller than 5 micron, preferably smaller than 3 micron, more preferably smaller than 1000 nm, and even more preferably smaller than 500 nm. The advantages of making a dispersion of aggregates of ever smaller size, is that the nanotubes can also be better dispersed in the polymer matrix, which can result in a more effective contribution of the nanotubes to the mechanical strength of the composite fibre.. The length of nanotubes should, however, not be too short, since a high aspect ratio contributes more to a high strength of the final composition. Preferably, the nanotubes show an aspect ration of at least 100, more preferably at least 250, even more preferably at least 500, and still more preferably at least 1000. In WO 9839250 A1 several ways are described to adjust the length of nanotubes in a controlled way.

Preferably, single-wall nanotubes (SWNT) are used, because they contribute more effectively to the mechanical strength of a composite per volume fraction of nanotubes than MWNT.

In one embodiment of the method according to the invention a colloidal dispersion of nanotubes is made by dispersing in a 'good solvent' for nanotubes, optionally with sonication; that is with ultra-sonic vibration. Various hydrocarbons are mentioned as suitable solvents in WO 9839250 A1. Preferably, the solvent (solvent 1 in step (a1)) is selected from the group of halogenated hydrocarbons, more preferably from chlorinated hydrocarbons. These solvents were found to result in smaller ropes of nanotubes. Suitable examples include chlorinated aliphatic hydrocarbons and chlorinated aromatic hydrocarbons. Very small aggregates and some individual dispersion were observed when using solvents like 1,2-dichloroethane and 1,2-dichlorobenzene. It has further been observed that dispersion is better if a low concentration of nanotubes in solvent 1 is used. Too low a concentration, however, is not practical and might cause problems in subsequent steps of the method according to the invention. A suitable concentration range is therefore 0,1 - 10 mass% nanotubes in solvent 1, preferably 0,5 - 5 mass%, more preferably 1 3 mass%. The concentration and amount of (a1) is preferably chosen such, that after combining with (a2) the mixture contains about 0.5 - 20 mass% of nanotubes based on the polymer, preferably about 1 - 15 mass%, and even more preferably about 2 - 10 mass%; this also being the concentration of nanotubes in the finally obtained fibre.

In another preferred embodiment a dispersion aid, like a surfactant is added to (a1) as other component, the advantage being an even better dispersion. Optionally, sonication may be used. Preferably a non-ionic surfactant is used, like an ester- or amide-derivative of a long chain carboxylic acid, like a fatty acid, or a block copolymer containing two blocks of different character. Typical examples of the latter are compounds containing an aliphatic polyether segment, for example based on an alkylene oxide, combined with a more apolar segment. Such compounds are also used in other application areas, such as in dispersing colorants in a polymer matrix, and are known to the person skilled in the art. Another example of a suitable dispersion aid is a highly branched oligomer or copolymer containing both polar and apolar groups, for example a polyesteramide copolymer. Preferably, nanotubes are mixed with the dispersion aid as such, before diluting with solvent 1. Especially when using a highly branched oligomer as dispersion aid, very finely dispersed nanotubes can be obtained. In view of the very high surface area of nanotubes, a relatively large amount of dispersion aid proves to be useful, that is about equal amounts as the nanotubes may be used. An advantageous effect of using a surfactant on dispersing nanotubes was also demonstrated in Chem. Mater. 2000, 12, 1049-1052, in making a thermoset epoxy composite from an acetone solution, but this publication is silent on using nanotubes in fibre spinning.

In another embodiment of the method according to the invention, a certain amount of the polymer is already added to (a1) as other component. This may be done before, during or after initially dispersing the nanotubes. It is also possible to dissolve the polymer in a separate amount of solvent 1, and then combine the nanotubes dispersion and polymer solution. The advantage of adding a certain amount of the polymer in this stage is that the polymer helps preventing re-aggregation of nanotubes into non-dispersed particles. The polymer concentation in (a1) is preferably relatively low, for example less than 5 mass%, preferably less than 2.5 masss% based on (a1), so that the viscosity of the mixture remains relatively low to ensure better mixing and/or dispersing.

In a further embodiment of the method according to the invention, the dispersion (a1) can be first prepared with a low concentration of components, but can be concentrated after a colloidal dispersion of the nanotubes is obtained. The advantage thereof is, that a possible negative effect of solvent 1 on producing an elongated product from the polymer solution after combining (a1) and (a2) is reduced or prevented, while still an optimum dispersion can be made. Such a negative effect may result if solvent 1 would for example hamper solidification of a fluid product of polymer solution into a solvent-containing gel product. Especially in case (a1) also contains some of the polymer, re-aggregation of nanotubes into aggregates during such a concentration step is prevented.

In still another embodiment of the method according to the invention, nanotubes that have been chemically modified are used in step (a). Such modification may have introduced functional groups at the end of the tube, which may be opened, or on the surface. These functional groups affect the surface properties of the nanotubes, and contribute to easier dispersion into individual nanotubes in a solvent. Such functional groups may contribute to the desired increase in strength of the composite elongated product. Chemical modification of SWNT is a.o. described in WO 9839250 A1.

As already described above, solvent 1 is a 'good solvent' for nanotubes and should be miscible with solvent 2 of component (a2), which is a solvent normally used for solution processing of the polymer concerned. In case of highly polar polymers like aromatic polyamides, polybenzoxazoles or polybenzothiazoles solvent 2 will often comprise a highly concentrated strong acid; solvent 1 should be miscible and compatible therewith. For the other group of polymers indicated above, solvent 2 is generally an organic solvent with a polar or apolar character, depending on the polymer. Typical examples included N-methylpyrrolidone, dimethylacetamide, alcohols or glycols, and aliphatic or aromatic hydrocarbons. Polyolefines of high molar mass, especially UH-PE, as used in a preferred embodiment of the method according to the invention, are in many solvents only soluble at higher temperatures and solutions obtained can solidify upon cooling into a gel-like mass, also referred to as gel product. This effect is advantageously used in the so-called gel-processing or gel spinning of UH-PE solutions into high strength elongated products, especially fibres. Suitable solvents as solvent 2 for this process are aliphatic, cycloaliphatic and aromatic hydrocarbons with boiling points of at least 100°C, preferably at least equal to the extrusion or spinning temperature. The boiling temperature of the solvent is preferably not so high that evaporation from the product spun becomes very difficult. Typical examples include octane, nonane, decane or isomers thereof and other linear or branched hydrocarbons, like parafines, petroleum fractions, toluenes or xylenes, naphthalene, or hydrogenated derivatives thereof, such as tetraline, decaline, but also halogenated hydrocarbons. The concentration of the polymer in solvent 2 is chosen such that (a2) has a suitable viscosity for processing this solution into elongated products like fibres in step (b), and will be dependent on the solvent, the molar mass and type of polymer, as well as on processing conditions, like temperatures and shear rates. Suitable concentration ranges may vary from 1 to 50 mass%, for UH-PE a typical range is 2 - 30 mass%, preferably 5 - 15 mass%. In step (b) of the method according to the invention said polymer solution containing dispersed nanotubes is spun into elongated products, like fibres through a spinneret comprising at least one orifice. The dimensions and geometry of the orifice may vary substantially, and can be optimised by the skilled person depending on the type of polymer and solvent used. Upon leaving the orifice the product may still be in a fluid state (solution product), but show enough strength to withstand some drawing before the product solidifies. Generally, the solution product is extruded into air before it is cooled in e.g. a liquid bath, during which phase the product can be highly stretched. The solution stretch ratio (also referred to as solution draw ratio or draw down ratio) may vary within wide ranges, from 1 of up to several hundreds, depending on the type of polymer. For polymers with relatively flexible molecules, like polyolefins, the solution stretch ratio is generally low, wherein rigid chain polymers are extensively stretch in this phase. The solution product may be cooled by a flow of air, or by quenching in a liquid, being a non-solvent for the polymer. If this liquid is miscible with solvent 1 and/or 2, the solvent can be extracted from the fibre. The liquid is generally also a non-solvent for the nanotubes, so that these remain in the polymer phase. If the quenching liquid is not miscible with solvent 2, it merely functions as an alternative to air-cooling. In this case a solidified product is obtained that still contains solvent 2. This solvent-containing product is generally referred to as being in a gel-state and called a gel product. Part of the solvent may be removed by extraction or evaporation. During such removal, the temperature may be increased somewhat, but should not be so high that the polymer would re-dissolve. This gel product may again be stretched, typical gel stretch ratios may vary from 1 to about 100 or even more, depending on the type of polymer and stretch ratios applied in the other stages (solution and solid-state). Subsequently, remaining solvents can be removed from the stretched product by extraction or evaporation, again taking care not to disrupt polymer crystallinity by increasing the temperature too much, that is not above Tm, preferably at least degree below Tₘ, more preferably several degrees below Tₘ, until the fibre is substantially free of solvent. It should be realized, that Tₘ of the polymer can increase upon increasing molecular orientation during stretching. Stretching and removal of solvent can also take place simultaneously.

After removal of solvent, the product can subsequently be further stretched in the solid state below Tₘ. The solid-state stretch ratio that can be applied is again dependent on the type of polymer and stretch ratios applied in the other stages (solution and gel stretching). In general it can vary from 1 up to about 100 or even more. Preferably, solid-state stretching is performed at elevated temperature, up to slightly below the crystalline melting point of the polymer in the product. Solid-state stretching may also take place in more than one step; for example at different, increasing temperatures. This may result in a higher maximum stretch ratio and in better mechanical properties of the fibre.

In the method according to the invention the stretch ratio that is applied to the product below the melting point of the polymer, is at least 5. This stretch ratio is the total or overall stretch ratio and is calculated as the multiplication of the stretch ratios applied to the product below the melting point of the polymer in the various possible stages of the method; which can include the solution stretch ratio, the gel stretch ratio and/or the solid-state stretch ratio.

Preferably, this total stretch ratio applied below Tₘ is at least 10, more preferably at least 20, even more preferably at least 30, still more preferably at least 40, even more preferably at least 50. The advantage of applying a higher stretch ratio below Tₘ is a better orientation of both polymer molecules and nanotubes, resulting in higher tensile strength.

The invention further relates to high strength elongated products, preferably fibres, containing nanotubes obtainable by the method according to the invention.

The invention especially relates to high strength polyolefin elongated products, preferably fibres, containing nanotubes. More specifically, the invention concerns such fibres having a tensile strength of higher than 3.0 GPa, preferably higher than 3.5 GPa, more preferably higher than 4.0 GPa, still more preferably higher than 4.5 GPa, even more preferably higher than 5.0 GPa, still more preferably higher than 5.5 GPa, and most preferably higher than 6.0 GPa. Preferably such fibres are made from a composition comprising HD-PE and nanotubes. Such polyolefin fibres may be produced on an industrial scale as multi-filament yarns using the method according to the invention. Polyethylene fibres of such high strength have been mentioned before in literature, but only for a monofilament made on laboratory scale and not containing dispersed nanotubes.

The invention also relates to a process for making composite articles wherein high strength elongated products, like fibres, containing nanotubes obtainable by the method according to the invention are used. The advantage of this process is that a lower amount of fibres can be used for making an article of certain properties, or articles of higher mechanical strength can be made. Examples of such composite articles include ropes, cables, anti-ballistic composites like panels or protective clothing.

## Claims

1. Method of producing a high strength and high modulus elongated product comprising the steps of (a) making a composition comprising a semi-crystalline polymer and carbon nanotubes, (b) extruding said composition into an elongated product, and (c) stretching the product below the melting point of the polymer, **characterised in that** in step
(a) the composition is obtained by mixing
(a1) a colloidal dispersion of carbon nanotubes and optionally other components in a solvent 1 and
(a2) a solution of the polymer in a solvent 2,
wherein solvents 1 and 2 are miscible;
(b) extruding is performed from the mixture obtained in (a); and
(c) a stretch ratio of at least 5 is applied below the melting point of the polymer.

2. Method according to claim 1, wherein the polymer is a polyolefin.

3. Method according to claim 2, wherein the polyolefin is a polyethylene of molar mass M_{w} above about 500,000 g/mol.

4. Method according to any one of claims 1-3, wherein the carbon nanotubes are single-wall nanotubes.

5. Method according to any one of claims 1-4, wherein solvent 1 in (a1) is a halogenated hydrocarbon.

6. Method according to any one of claims 1-5, wherein the other components in (a1) comprise a dispersion aid.

7. Method according to claim 6, wherein the dispersion aid is a non-ionic surfactant.

8. Method according to any one of claims 1-7, wherein (a1) further comprises the polymer.

9. Method according to any one of claims 1-8, wherein (a1) is first prepared with a low concentration of components, but is concentrated after a colloidal dispersion of the carbon nanotubes is obtained.

10. Method according to any one of claims 1-9, further comprising a step wherein the product is stretched as a gel product below the melting point of the polymer.

11. Method according to any one of claims 1-10, wherein the elongated product contains about 1 - 10 mass% of carbon nanotubes based on the polymer.

12. Method according to any one of claims 1-11, wherein the stretch ratio applied below the melting point of the polymer is at least 10.

13. Elongated product containing carbon nanotubes obtainable by the method according to any one of the preceding claims.

14. Polyolefin fibre containing carbon nanotubes having a tensile strength of higher than 3.0 GPa.

15. Process for making composite articles wherein high strength elongated products, preferably fibres, according to claims 13 or 14 are used.
